# EUROPEAN PATENT APPLICATION

(11) **EP 2 400 367 A2**
(43) Date of publication of application: **28.12.2011**
(21) Application number: 11170989.5
(22) Date of filing: 22.06.2011
(51) Int. Cl.: G06F 1/16, G06F 3/048

(54) **Apparatus for processing an interactive three-dimensional object**

(30) Priority: 28.06.2010 KR 20100061022
(71) Applicant: Pantech Co., Ltd., Seoul 121-270 (KR)
(72) Inventor: Hwang, Ju Hee, 121-270 Seould (KR); Hong, Jae-man, 121-270 Seoul (KR); Kong, Kyoung Jin, 121-270 Seoul (KR); Geum, Yun Seop, 121-270 Seoul (KR); Kim, Tae Hun, 121-270 Seoul (KR); Shin, Jin Woo, 121-270 Seoul (KR); Shin, Pil Woo, 121-270 Seoul (KR)
(74) Representative: Jordan, Volker Otto Wilhelm

(57) **Abstract**

Provided is a three-dimensional (3D) object processing apparatus. The apparatus is capable of interacting with a user and utilizes a stereoscopic effect of a 3D user interface (UI) as information. The apparatus includes a combination of various units, including but not limited to, a display panel, a sensing unit and control unit to effectuate interaction between a user and a 3D object sourced from the apparatus.

## Description

This application claims priority from and the benefit under 35 U.S.C. §119(a) of Korean Patent Application No. 10-2010-0061022, filed on June 28, 2010, which is incorporated by reference for all purposes as if fully set forth herein.

### BACKGROUND

FIELD

Exemplary embodiments are directed to an apparatus for processing a three-dimensional (3D) object, and in particular, to a 3D object processing apparatus capable of being interacted with a user, and providing various 3D user interfaces (UIs).

DISCUSSION OF THE BACKGROUND

A three-dimensional (3D) display technology may be used to output a 3D image from a flat two-dimensional (2D) image, such as a movie. A 2D-based 3D user interface (UI) technology may apply the concepts of cube and depth, and thus representing a larger amount of data than the data represented by 2D UI technology. However, the 2D-based 3D UI technology may not focus on the interaction with a user, instead focusing resources on a conversion effect between a 2D UI and a 3D UI.

### SUMMARY

Exemplary embodiments of the present invention provide a three-dimensional-(3D) object processing apparatus capable of interacting with a user and providing a 3D UI that utilizes a stereoscopic effect of 3D UI as information.

Additional features of the invention will be set forth in the description which follows, and in part will be apparent from the description, or may be learned by practice of the present invention.

An exemplary embodiment of the present invention discloses a three-dimensional (3D) object processing apparatus, comprising a display panel to stereoscopically display a 3D object; a sensing unit to sense a result of a user's manipulation of the 3D object; and a control unit to perform a function corresponding to the sensed result of the sensing unit.

Another exemplary embodiment of the present invention discloses a three-dimensional (3D) object processing apparatus, comprising a display panel to stereoscopically display a 3D object corresponding to a category; and a control unit to control the display panel to display the 3D object with an adjusted display condition based on the status of the category.

Another exemplary embodiment of the present invention discloses a three-dimensional (3D) object processing apparatus, comprising a display panel to display a 3D object corresponding to an event in a pop-up form if the event occurs; and a control unit to adjust a pop-up rate and a size of the 3D object depending on a priority associated with the event.

Another exemplary embodiment of the present invention discloses a 3D object processing apparatus including a display panel to stereoscopically display a 3D object; a sensing unit to sense instructions for converting a 3D object into a two-dimensional (2D) object and a 2D object into a 3D object; and a control unit to adjust the display condition of the 3D object and the 2D object when one of the instructions is sensed.

It is to be understood that both the foregoing general description and the following detailed description are exemplary and explanatory and are intended to provide further explanation of the invention as claimed

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a 3D object processing apparatus for interaction with a user, according to an exemplary embodiment of the present invention.

FIG. 2 is a block diagram of a first sensing unit shown in FIG. 1 according to an exemplary embodiment.

FIG. 3 is a view illustrating a first display panel according to an exemplary embodiment.

FIG. 4 is a view illustrating a first display panel according to an exemplary embodiment.

FIG. 5 is a view illustrating a first display panel according to an exemplary embodiment.

FIG. 6 is a view illustrating a first display panel according to an exemplary embodiment.

FIG. 7 is a view illustrating a first display panel according to an exemplary embodiment.

FIG. 8 is a view illustrating a first display panel according to an exemplary embodiment.

FIG. 9 is a view illustrating a first display panel according to an exemplary embodiment.

FIG. 10 is a view illustrating a menu selection according to an exemplary embodiment.

FIG. 11 is a block diagram illustrating a 3D object processing apparatus according to an exemplary embodiment.

FIG. 12 is a view illustrating a second display panel according to an exemplary embodiment.

FIG. 13 is a view illustrating a second display panel according to an exemplary embodiment.

FIG. 14 is a view illustrating a second display panel according to an exemplary embodiment.

FIG. 15 is a block diagram illustrating a 3D object processing apparatus according to an exemplary embodiment.

FIG. 16 is a view illustrating a third display panel according to an exemplary embodiment.

FIG. 17 is a view illustrating a third display panel according to an exemplary embodiment.

FIG. 18 is a view illustrating a third display panel according to an exemplary embodiment.

FIG. 19 is a block diagram illustrating a 3D object processing apparatus according to an exemplary embodiment;

FIG. 20 is a view illustrating conversion between a 2D object and a 3D object, according to an exemplary embodiment.

FIG. 21 is a view illustrating conversion between a 2D object and a 3D object, according to an exemplary embodiment.

FIG. 22 is a view illustrating conversion between a 2D object and a 3D object, according to an exemplary embodiment.

FIG. 23 is a view illustrating conversion between a 2D object and a 3D object, according to an exemplary embodiment.

FIG. 24 is a view illustrating a 3D object processing apparatus according to an exemplary embodiment.

FIG. 25 is a view illustrating a method for providing a 2D image in a 3D object processing apparatus according to an exemplary embodiment.

FIG. 26 is a view illustrating a method for changing a perspective effect of a 3D object in a 3D object processing apparatus according to an exemplary embodiment.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Stereoscopic technology is used to stereoscopically display a user interface (UI), a moving image, and the like, using 3D object. If a person sees an object with both eyes, a visual difference of the image seen by each eye occurs due to a distance between both eyes. This effect causes the brain to stereoscopically recognize the image difference seen by both eyes. Stereoscopic technology uses this feature to provide a separated image to a left eye and a right eye using at least one image output device.

An image separating method, used to separate an image for stereoscopic technologies, may include a time-division method and a space-division method.

The time-division method sequentially provides images to be recognized by a left and right eye using a single image output device. For example, a time-division method may be accomplished by use of a shutter glass method.

The space-division method simultaneously provides images to be recognized by a left eye and a right eye, respectively. Examples of space-division methods may include a polarizing glass filter method, a barrier filter method, a Lenticular lens method and other like methods.

The polarizing glass filter method provides a one-sided image to each eye by filtering out through the use of a polarizing glass filter at least one of a vertical polarization image and a horizontal polarization image output from an image output device. Thus, the polarizing glass filter method described above produces a 3D image by selectively providing a left image and a right image to each eye, respectively.

The barrier filter method selectively provides an image to a left eye and a right eye using a barrier filter that is mounted on a single image output device. The image output device may contain a switchable barrier filter, which is capable of switching the barrier filter on or off. The barrier filter allows a 3D image to be produced by the image output device. Thus, by controlling the barrier filter switch, the barrier filter may be operated during outputting of a 3D image, and the barrier filter may be not operated during output of a two-dimensional (2D) image.

The Lenticular lens method selectively provides an image to either a left eye or a right eye by coating a lenticular lens that may be located on an image output device.

A 3D space, where an appendage or object associated with a user moves in midair or in a location directly attached to a device, may be sensed by at least one of an optical sensor technique, a light beam intercept technique, an electromagnetic distortion sensing technique, a camera sensing technique or other sensing techniques known to one of ordinary skill in the art. Various sensing techniques will be described below. However, one of ordinary skill in the art will recognize that other sensing techniques may be used with the various exemplary embodiments disclosed herein.

The optical sensor technique recognizes an appendage or object associated with a user reflected by an infrared light beam irradiated from a device. An example of a source for the infrared light beam may be from behind a display face of a display panel.

Another sensing technique that may be used is the light beam intercept technique. This technique may not recognize a touch by a user behind a device, for example, a touch by user of a display face of a display panel. The sensing technique may recognize a touch by a user through the interception of an infrared light beam irradiated onto the device. The beam may be irradiated onto the device on the display face in at least four directions.

Another sensing technique that may be used is the electromagnetic distortion sensing technique. This technique uniformly creates an electromagnetic field at a space associated with a display panel, such as a display face, and recognizes a movement, for example a dielectric, by sensing the degree of distortion of the electromagnetic field if the distortion of the electromagnetic field is caused by the dielectric (for example, a finger) entering the space. The electromagnetic distortion sensing technique may recognize a dielectric if the dielectric is located at a space away from the device, such as from the display surface of a display panel. This sensing technique may also recognize the dielectric if the dielectric contacts the object, or at a specific location such as the display face. Also, the electromagnetic distortion sensing technique may determine which finger of which hand and at which angle a finger approaches the space in the case that a dielectric is a finger. Alternatively, this sensing technique may be used to determine other specific appendages and objects associated with a user.

Another sensing technique that may be used is the camera sensing technique. This technique may recognize a movement of an appendage, such as a finger, by analyzing a contact point between an object, or a specific part of the object such as a display face, and an image of an appendage, or an image of the finger taken. This analysis may be done using artificial intelligence. The image may be taken by a camera.

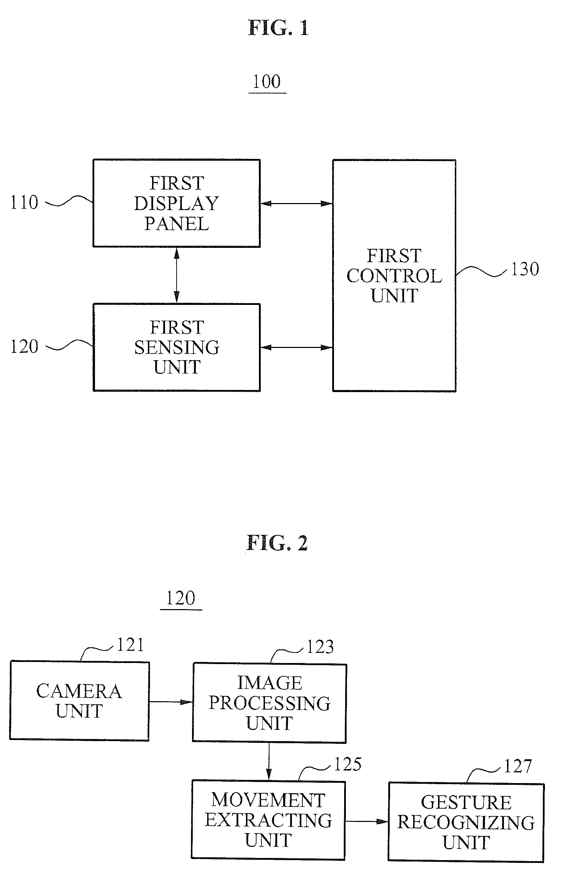

FIG. 1 is a block diagram illustrating a 3D object processing apparatus for interaction with a user, according to an exemplary embodiment of the present invention.

Referring to FIG. 1, the 3D object processing apparatus 100 may display a UI as a 3D object, with the 3D object being capable of interaction with a user. The 3D object processing apparatus 100 may include all portable electronic applications with the capabilities to display a UI. These portable electronic applications may include, but are not limited to, smart phones, mobile phones, display devices and the like. In the exemplary embodiment shown in FIG. 1, the 3D object processing apparatus 100 includes a first display panel 110, a first sensing unit 120 and a first control unit 130.

In the case that the apparatus 100 is a smart phone, the first display panel 110 may display various UIs provided by the smart phone, such as various images stored in the smart phone. The first display panel 110 may display a 2D object or a 3D object, based on instructions from the first control unit 130. The 2D or 3D object may represent various conditions or attributes, such as, functions of the apparatus 100, an amount of data per category, priority of categories associated with the data contained in the apparatus 100, time and other attributes associated with the apparatus.

The first sensing unit 120 may include a touch sensor and a proximity sensor. The touch sensor senses a touch of a user. The proximity sensor senses an appendage of a user, such as a finger, that moves in a space proximal to the apparatus 100, or specifically to a screen of the first display panel 110. Thus, the proximity sensor may sense a user's manipulation of a 3D object in a space where the 3D object is displayed. The first sensing unit 120 may sense an appendage of a user, or specifically a finger, by using at least one of an optical sensor technique, a light beam intercept technique, an electromagnetic distortion sensing technique and a camera sensing technique as mentioned above. The first sensing unit 120 may be provided on a screen of the first display panel 110 or within the first display panel 110, or on other areas associated with the apparatus 100.

FIG. 2 is a block diagram illustrating a first sensing unit according to an exemplary embodiment.

Referring to FIG. 2, the first sensing unit 120 includes a camera unit 121, an image processing unit 123, a movement extracting unit 125 and a gesture recognizing unit 127. The image processing unit 123 analyzes an image, such as a finger gesture, obtained by the camera unit 121 and a reference point on the apparatus 100, such as the screen of the first display panel 110. This analysis may be done using artificial intelligence. The analysis locates a contact point between the image, or a specific object in the image such as a finger gesture, and the reference point on the apparatus 100. In addition, the image processing unit 123 extracts an outline of the image, such as the finger gesture image, obtained by the camera unit 121.

The movement extracting unit 125 extracts a movement area from the image, such as the finger gesture image.

The gesture recognizing unit 127 extracts a user area from the extracted movement area (from the movement extracting unit 125) or another area associated with a user, such as a face area or a hand area. The gesture recognizing unit 127 recognizes a gesture by tracking an area, such as the hand area, from the continuously extracted movement area or another area described above, and extracts a meaningful gesture area which corresponds to a singular gesture, and then extracts a gesture characteristic of the extracted gesture area. The gestures to be recognized may vary. Some examples of gestures to be recognized may be pushing, pulling or dragging of a 3D object in midair.

The first control unit 130 may perform a function, such as corresponding the sensing result of the first sensing unit 120, i.e., the gesture to be recognized, or adjusting the display condition of the 3D object.

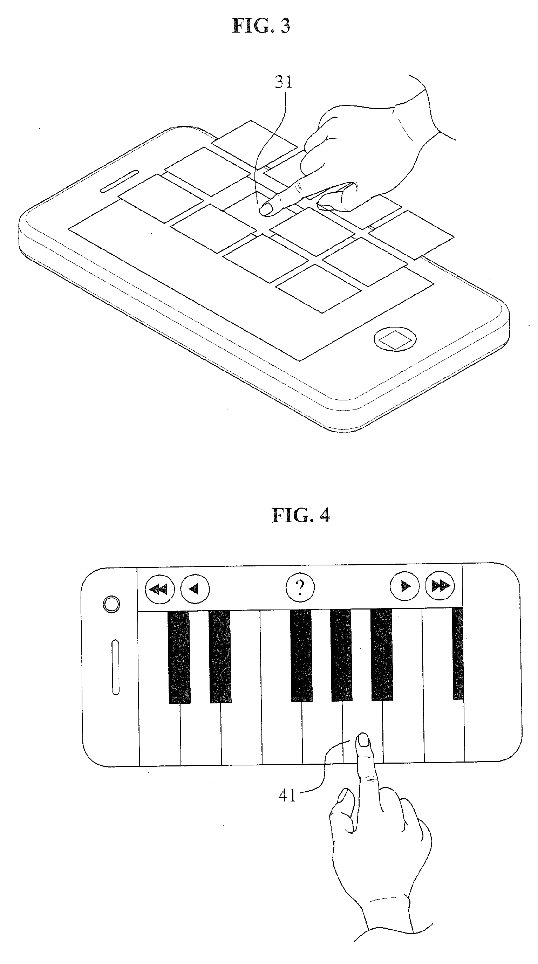

FIG. 3 is a view illustrating a first display panel according to an exemplary embodiment.

The 3D object displayed on the first display panel 110 may have a plurality of icons. If the first sensing unit 120 senses a user's midair selection manipulation on at least one of the plurality of icons, the first control unit 130 may control the first display panel 110 to display the selected icon higher or lower in height than the other icons. Referring to FIG. 3, the selected icon 31 is displayed lower in height than the other icons.

If a user selects one widget icon (such as selected icon 31) among a plurality of 3D objects, the selected icon 31 is stereoscopically displayed, and may be displayed to appear as though the selected icon 31 gradually goes downwards. Thus, the user may intuitively determine the selected icon 31. In an example, a moving rate of the selected widget icon downward the first display panel 110 may represent an operating time of a corresponding application.

FIG. 4 is a view illustrating a first display panel according to an exemplary embodiment.

A user may directly touch a desired key 41 or push the desired key 41 in midair. If the first sensing unit 120 senses a user's midair push manipulation on a desired key 41, the first control unit 130 may control the first display panel 110 to display the pushed desired key 41 in a changed form, such as lower in height. Thus, the user may be provided with more of a stereoscopic effect with midair manipulation than with a direct touch manner. In addition to a piano keyboard, this may be applied to the other musical instruments.

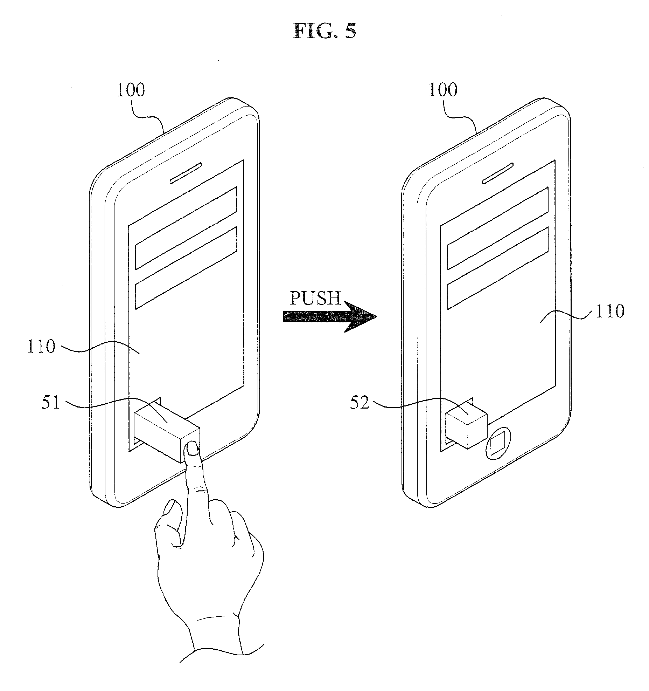

FIG. 5 is a view illustrating a first display panel according to an exemplary embodiment.

If the first sensing unit 120 senses a user's midair push manipulation on the volume bar 51, the first control unit 130 may control the apparatus 100, or specifically the first display panel 110, to display a volume bar 52 with reduced height and actually adjust the volume to be lowered. When the first sensing unit 120 senses a user's midair pull manipulation on the volume bar 52, the first control unit 130 may display the first display panel 110 to the display the volume bar 51 with an increased height and actually adjust the volume to be raised. Thus, the first control unit 130 may adjust the height of the volume bar, and consequently the volume, by the control of the user.

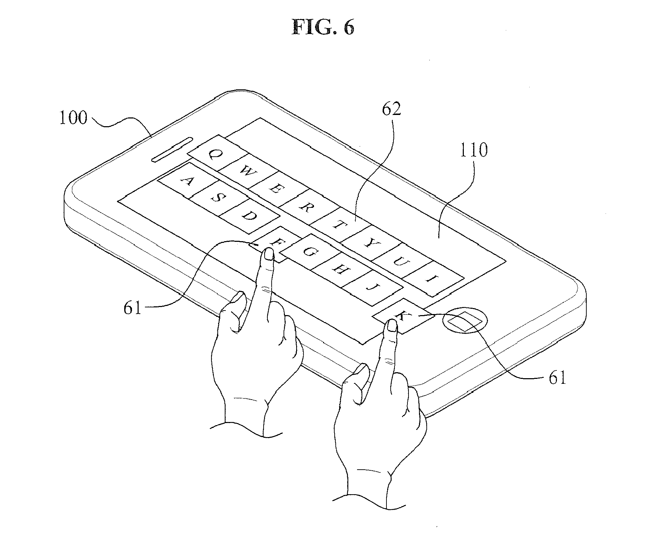

FIG. 6 is a view illustrating a first display panel according to an exemplary embodiment.

The first control unit 130 may control the first display panel 110 to display a key selected 61 in midair by a user, the display of the key selected being either higher or lower in height than the other keys of the keyboard UI 62. The first control unit 130 may be provided with an anti-typo function. For example, if a user simultaneously selects two keys of the keyboard UI 62, the first control unit 130 may control the first display panel 110 to display the two selected keys higher in height than the other keys of the keyboard UI 62. The user then may recognize that a mistyping has occurred, and may select a correct key among the two displayed keys. After which, the first control unit 130 controls the first display panel 110 to display the selected key 61 lower in height than the keyboard UI 62.

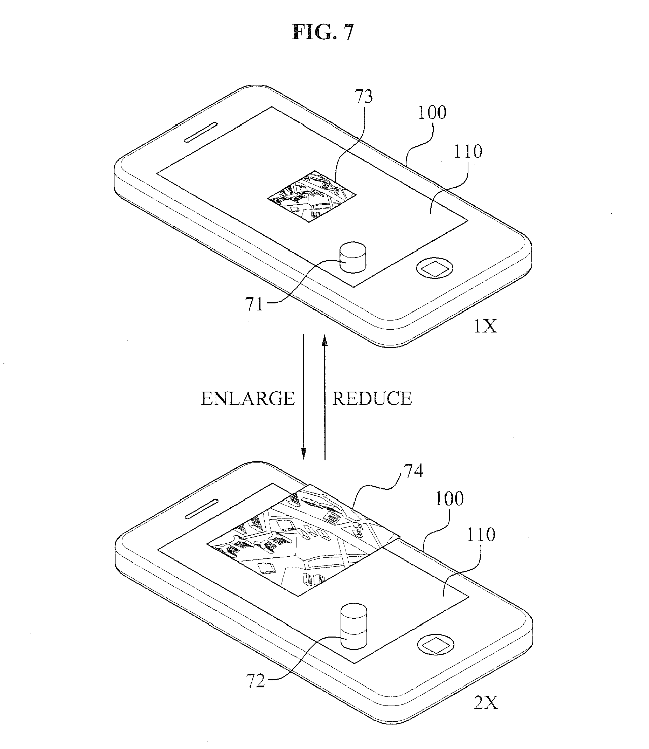

FIG. 7 is a view illustrating a first display panel according to an exemplary embodiment.

If a user's interaction on the first display panel 110 is sensed, such as touching a map displayed on the first display panel 110, the first control unit 130 may control the first display panel 110 to display the 2D map as a 3D object, i.e., a 3D map 73, and to display a UI 71 representing the current magnification (1X) of the map as a 3D object.

If a user's midair pull manipulation on the displayed map is sensed, the first control unit 130 may control the first display panel 110 to display the map with increased magnification, and to display a UI 72 representing the current magnification (2X) of the map as a 3D object. The map may be displayed with magnification increased by at least two times. Also, if a user's push manipulation on the displayed map is sensed, the first control unit 130 may control the first display panel 110 to display the map with reduced magnification and to display a UI 71 representing the current magnification (1X) of the map as a 3D object.

In another case, if a user's manipulation on the displayed UI 74, such as a tap on the displayed UI 74, is sensed, the first control unit 130 may control the first display panel 110 to display the map with a reduced magnification.

Also, if a user's push or pull manipulation is sensed after the user's direct touch on the displayed map, the first control unit 130 may adjust the magnification of the map.

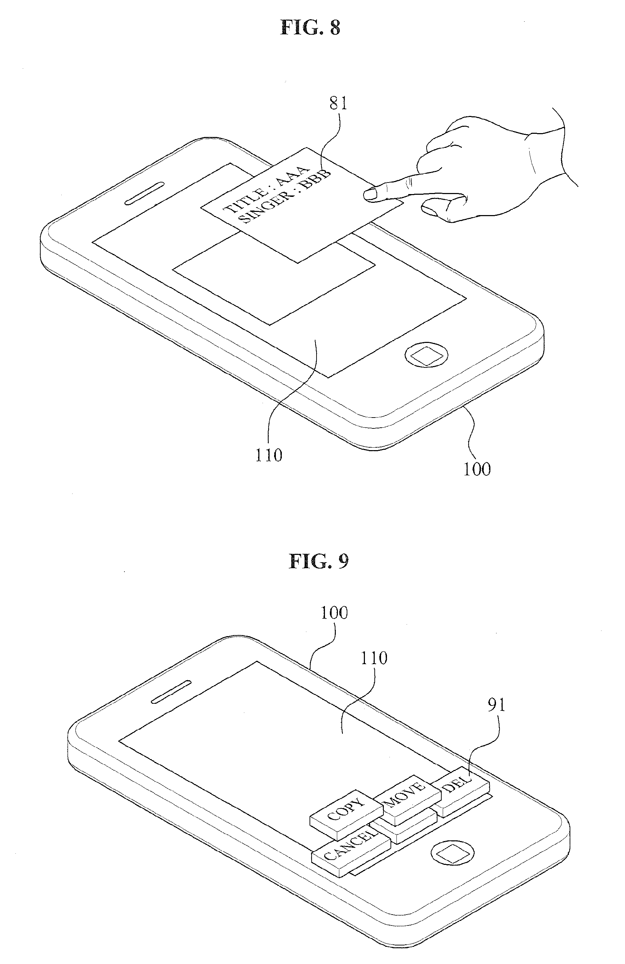

FIG. 8 is a view illustrating a first display panel according to an exemplary embodiment.

If a user clicks a button requesting the detailed information during the operation of a file, such as a music file, is being played or operated, the first control unit 130 may control the first display panel 110 to display information about the file, including details such as the title or singer, while the file is operating a pop-up form through a 3D object 81. The user may search for a related music or purchase a new music file using the displayed 3D object 81.

FIG. 9 is a view illustrating a first display panel according to an exemplary embodiment.

If a user selects a 3D mode on a menu page displayed on the first display panel 110, the first control unit 130 may control the first display panel 110 to display a sub-menu list 91 of the 3D mode as various 3D objects. The sub-menu list 91 is a menu displayable as a 3D object or a menu set to display as a 3D object. If a desired menu is selected in the displayed sub-menu list 91, the first control unit 130 may serve to execute the varopis functions of the selected menu.

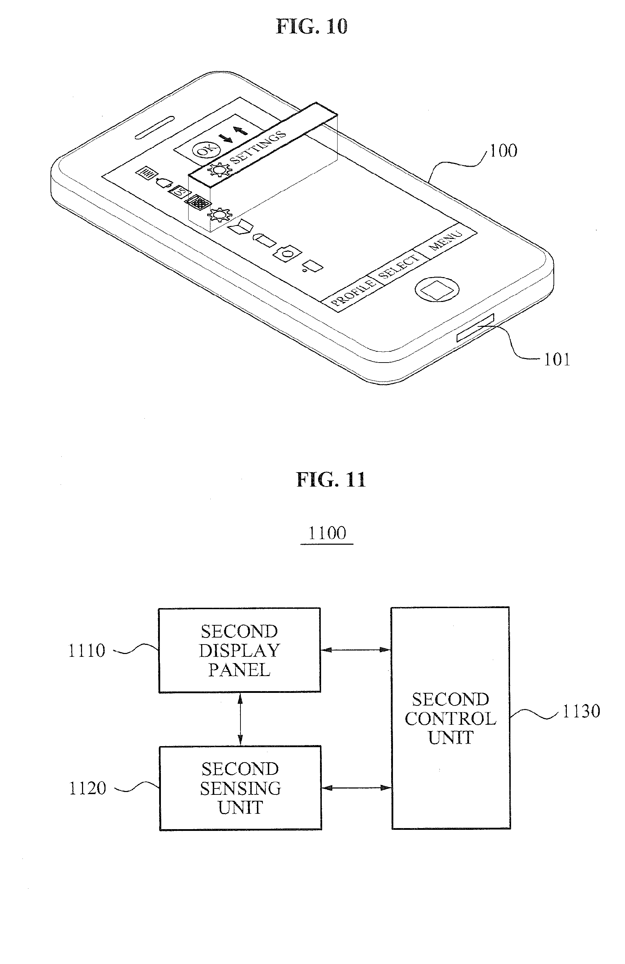

FIG. 10 is a view illustrating an example of menu selection according to an exemplary embodiment.

The first sensing unit 120 may further include the wind sensor 101 to an external force, such as a force caused by a breeze. If a user blows on the apparatus 100, such as for at least a predetermined time preset by the user, the first control unit 130 may control the first display panel 110 to display a target menu at a predetermined position, among a plurality of menus displayed on the first display panel 110. If the user blows at least twice in succession, the first control unit 130 may execute the target menu displayed at a predetermined position.

In an example, if a user touches the wind sensor 101, the first control unit 130 may convert into 3D mode. If the user inclines the apparatus 100, the first sensing unit 120 may recognize the inclined direction using an acceleration sensor, 6-axis sensor or any sensor for inclination detection. The recognized direction may be a horizontal direction or a vertical direction, with the direction being used to scroll the menu in a certain direction. In FIG. 10, a scroll direction is a vertical direction. If a scroll direction of a menu displayed on the first display panel 110 is determined (such as by the inclination of the apparatus), the user may blow into the wind sensor 101 for at least a predetermined time to change the position of a target menu. If the target menu is moved to in the middle of the first display panel 110, the user may select the target menu by one short blow, and thereafter may make two short blows. If the two blows (such as the short blows previously discussed) are sensed, the first control 130 executes the target menu displayed in the middle of the first display panel 110.

FIG. 11 is a block diagram illustrating an example of a 3D object processing apparatus according to an exemplary embodiment.

The 3D object processing apparatus 1100 of FIG. 11 may display a UI as a 3D object with a stereoscopic effect corresponding to the information, such as the attributes related to the information, and such. To display the UI as a 3D object, the 3D object processing apparatus 1100 includes a second display panel 1110, a second sensing unit 1120, and a second control unit 1130. The second display panel 1110, the second sensing unit 1120 and the second control unit 1130 may be similar to the first display panel 110, the first sensing unit 120 and the first control unit 130 of FIG. 1 and thus, detailed descriptions thereof are omitted herein.

The second display panel 1110 may stereoscopically display a 3D object corresponding to a category.

The second sensing unit 1120 senses a user's manipulation on or near the 3D object in a space where the 3D object is displayed.

The second control unit 1130 controls the second display panel 1110 to display a 3D object with an adjusted height depending on the condition of a category. The height of the displayed 3D object may represent the condition of the information for a corresponding category. For example, if the category is an application that fall is the gamut of an SMS (Short Message Service), an MMS (Multi Media Service), an E-mail and other similar services, the height of the 3D object may be proportional to an amount of data associated with each of the corresponding category. Accordingly, the user may intuitively recognize an amount of messages (i.e. corresponding to the data) possessed in one of the above enumerated applications before executing the application. For example, an apparatus 1100 with 10 SMS messages may display an SMS object higher, if viewed stereoscopically than an apparatus 1100 with 5 SMS messages.

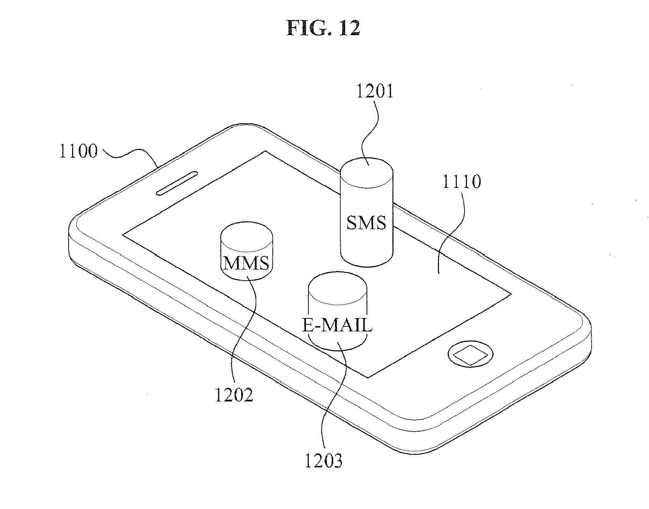

FIG. 12 is a view illustrating a second display panel according to an exemplary embodiment.

In the case of a message menu, a plurality of categories (as shown on the second display panel 1110) may be an SMS 1201, an MMS 1202, an E-mail 1203 and other categories of applications or messaging services associated with a handheld device. The height of a 3D object displayed on the second display panel 1110 may be proportional to one of an amount of data and the number of data files stored in each category. Referring to FIG. 12, the second display panel 1100 shows that an amount (such as data or number of files) of an SMS 1201 is larger than that of an MMS 1202 or an E-mail 1203.

In the case of a data folder, a plurality of categories may include a music folder, a movie folder, an image folder, and the like. The height of a 3D object displayed on the second display panel 1110 may reflect an amount of data or a number corresponding to data (such as files or items) stored in each folder.

When a user's midair push manipulation on at least one of the displayed 3D objects is sensed in a space where the 3D objects are displayed, the second control unit 1130 may be configured to delete data of a category corresponding to the pushed 3D object by the user.

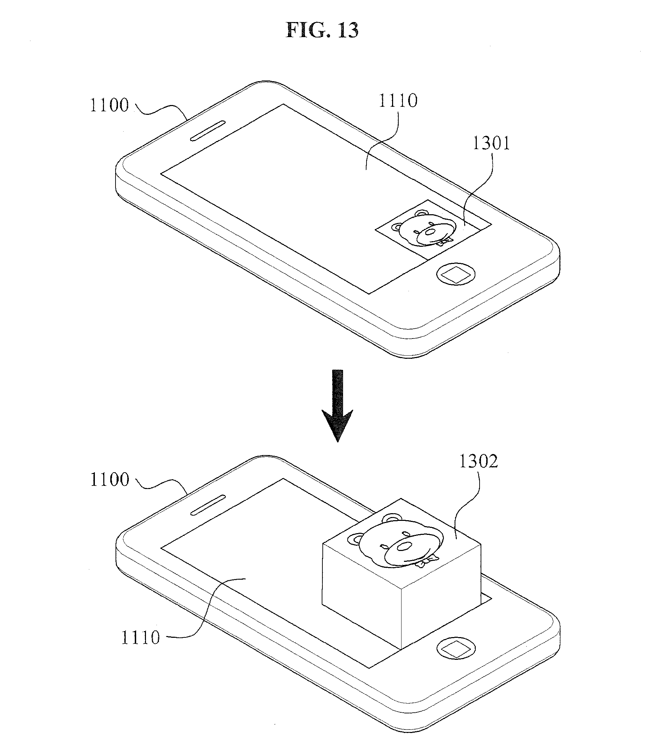

FIG. 13 is a view illustrating a second display panel according to an exemplary embodiment.

The second control unit 1130 may change the size or the shape of a 3D object displayed on the second display panel 1110 over a period of time. That is, the 3D object 1302 may reflect the changes depending on time or other conditions. For example, when a meeting starts, the second control unit 1130 displays an object indicating the meeting start time as a 2D object 1301, and as time passes, displays the object as a 3D object 1302, with the display of the object (now a 3D object) shown with gradually increased height. When a predetermined time is reached, the second control unit 1130 increases the height of the 3D object to the maximum. When a predetermined time is exceeded, the second control unit 1130 may enable the 3D object 1302 to be displayed in with another form on the second display panel 1110. Accordingly, the user can intuitively recognize how long the meeting lasted from the meeting lapse time displayed as a 3D object 1302.

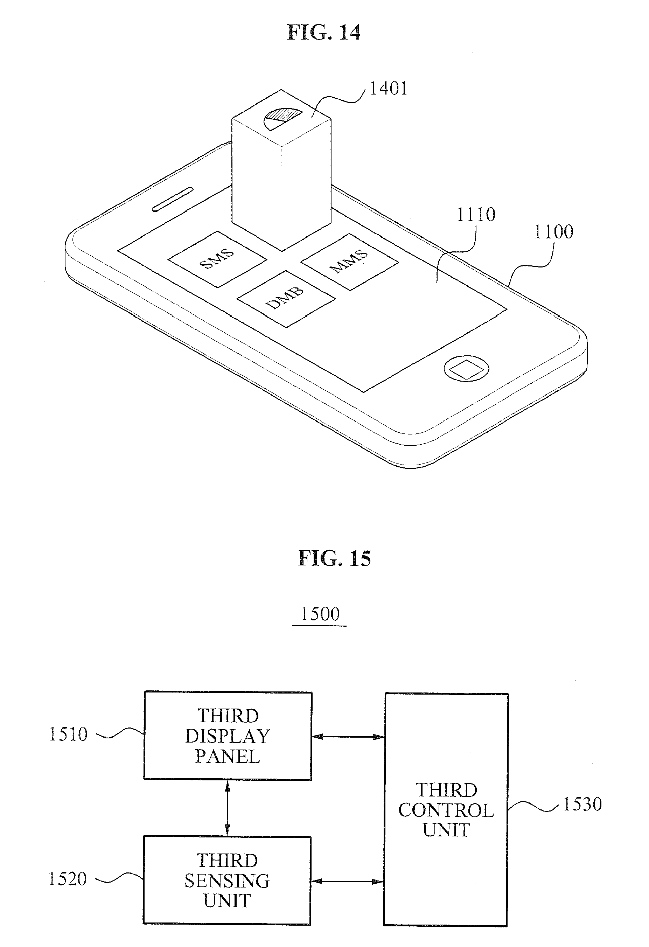

FIG. 14 is a view illustrating a second display panel according to an exemplary embodiment.

The 3D object 1402 may be a weather forecast icon, and may show various weather information, such as the amount of rainfall, snow, rain, the amount of sunlight, and the like. When a 3D object 1402 indicates the amount of rainfall, the second control unit 1130 displays, on the second display panel 1110, the 3D object 1402 may have a height adjusted based on the amount of rainfall. If the amount of sunlight is proper for taking a picture, the second control unit 1130 may be used to determine that a favorable weather condition is achieved, and thus instruct the apparatus 1100 to display a camera icon on the second display panel 1110. If a day's weather is sunny and weather forecast for the day after is rainy, the second control unit 1130 may display the day's weather as a 3D object, together with the tomorrow's weather. Thus, the user may predict the weather, based on the stereoscopic effect of the 3D object. In addition to the weather forecast, the second control unit 1130 may display a 3D object reflecting the other information on the second display panel 1110 in real time.

FIG. 15 is a block diagram according to an exemplary embodiment.

The 3D object processing apparatus 1500 of FIG. 15 displays a UI as a 3D object, and adaptively indicates the 3D object depending on the priority of an event. To display the UI as a 3D object, the 3D object processing apparatus 1500 includes a third display panel 1510, a third sensing unit 1520 and a third control unit 1530. The third display panel 1510, the third sensing unit 1520 and the third control unit 1530 are similar to the first display panel 110, the first sensing unit 120 and the first control unit 130 of FIG. 1, and the detailed description is omitted herein.

The third display panel 1510 stereoscopically displays a 3D object corresponding to a category. When an event occurs, the third display panel 1510 displays a 3D object corresponding to the event in a pop-up form.

The third sensing unit 1520 senses a user's manipulation on the 3D object in a space where the 3D object is displayed.

The third control unit 1530 controls the third display panel 1510 to adaptively display a 3D object depending on priority of an event. The event may be an alarm notifying a receipt of a call, an SMS or an MMS, an alarm of schedule set on a calendar, and other events associated with the apparatus 1500. The third control unit 1530 may adjust the height and a pop-up rate of a 3D object depending on a priority, attribute or importance of an event. Also, the third control unit 1530 may gradually increase the size of a 3D object after the 3D object is popped up.

In a case that an event occurs, the third control unit 1530 may enable a 3D object to be popped up from the bottom of the third display panel 1510 toward the user, so that the user can intuitively recognize the corresponding event with the popped up image.

If a call notification event or a text notification event occurs while the apparatus 1500 is providing a multi-tasking environment, the third control unit 1530 may also display a 3D object notifying receipt of an incoming call on the third display panel 1510.

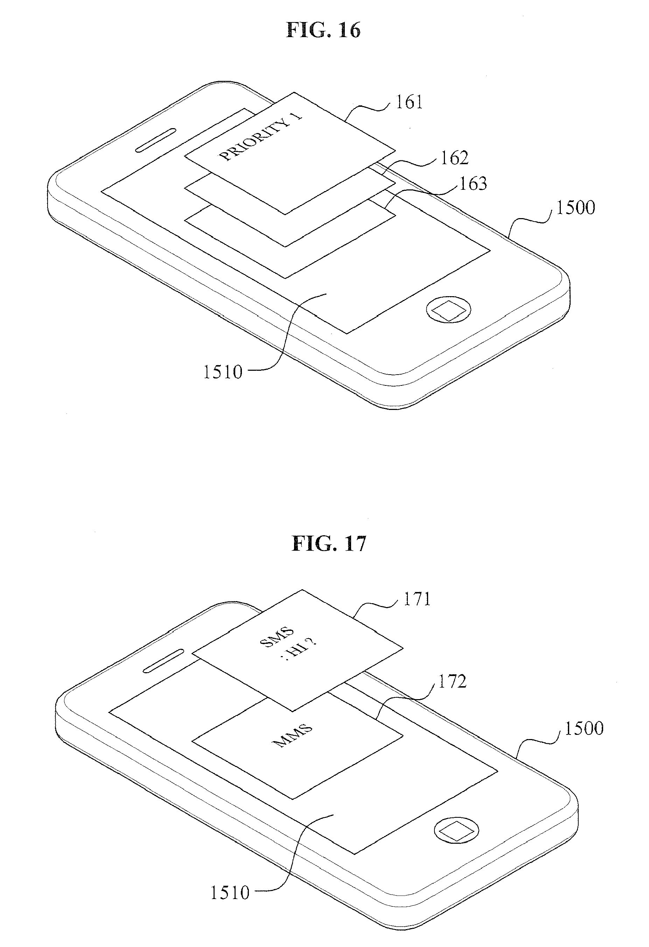

FIG. 16 is a view illustrating a third display panel according to an exemplary embodiment.

If a plurality of events occur at the same time, the third control unit 1530 controls the third display panel 1510 to display 3D objects 161, 162 and 163, each corresponding to the plurality of events. In this instance, the third control unit 1530 controls the third display panel 1510 to display a 3D object 161 with a highest priority in a larger size and project at a faster pop-up rate than the other events. Also, the third control unit 1530 may control the third display panel 1510 to display the 3D object 161 at the uppermost position viewed stereoscopically. These various actions are done so that the user can intuitively recognize occurrence of an important matter.

FIG. 17 is a view illustrating a third display panel according to an exemplary embodiment.

If an SMS notification event occurs while a user writes a text message using an MMS service 172, the third control unit 1530 controls the third display panel 1510 to display a 3D object 171 for an SMS. If a user's touch manipulation on the displayed 3D object 171 is sensed, the third control unit 1530 activates a menu corresponding to the 3D object to display the received SMS on the third display panel 1510. If a user's drag manipulation on the displayed 3D object 171 is sensed, the third control unit 1530 removes the 3D object 171 from the third display panel 1530 so that the 3D object 171 disappears from the third display panel 1530.

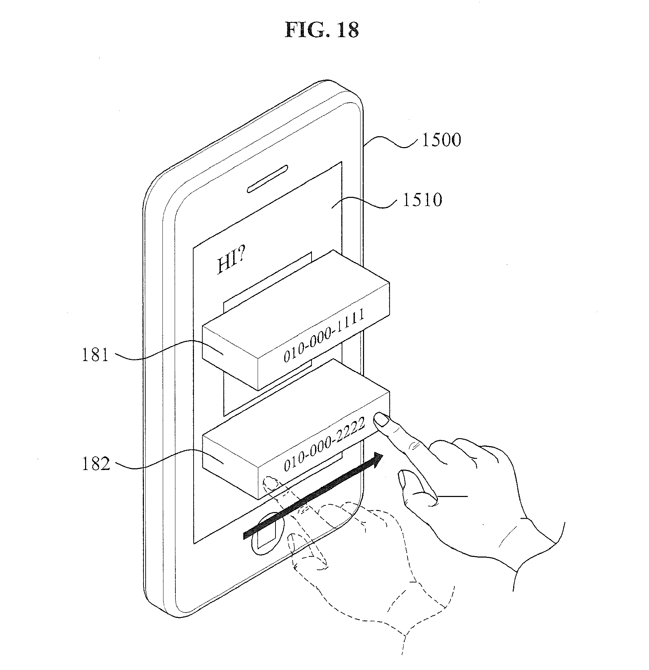

FIG. 18 is a view illustrating a third display panel according to an exemplary embodiment.

If a text message is received, the third control unit 1530 controls the third display panel 1510 to display a page related to the text message. In this instance, the third control unit 1530 controls the third display panel 1510 to display, as a 3D object, that allows a user an option to access another function of the apparatus 1500. These objects may include a telephone number, an E-mail address, a homepage address, etc. of a caller who sent the text message.

If there are multiple functions of the apparatus that may be accessed, the third control unit 1530 may control the third display panel 1510 to display 3D objects 181 and 182 with different stereoscopic effects depending on a usage amount correlated to each function. For example, if the multiple functions are a plurality of telephone numbers associated with multiple callers, the third control unit 1530 may enable a telephone number with a larger usage amount to be displayed as a larger 3D object 181. Thus, if a user's midair drag manipulation on the 3D object 181 is sensed, the third control unit 1530 makes a call attempt to a caller indicated on the 3D object 181.

If the third control unit 1530 controls the third display panel 1510 to display a telephone number directory stored in the apparatus 1500, the third control unit 1530 enables a frequently called telephone number to be displayed as a 3D object, and a less frequently called telephone number to be displayed as a 2D object. Thereby, the user can find a desired (i.e. frequently accessed) telephone number more quickly.

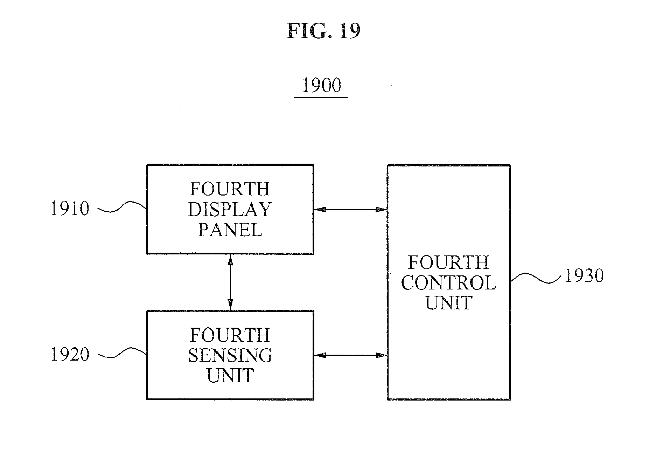

FIG. 19 is a block diagram illustrating according to an exemplary embodiment.

Referring to FIG. 19, the 3D object processing apparatus 1900 includes a fourth display panel 1910, a fourth sensing unit 1920 and a fourth control unit 1930. The fourth display panel 1910, the fourth sensing unit 1920 and the fourth control unit 1930 are similar to the first display panel 110, the first sensing unit 120 and the first control unit 130 of FIG. 1, and thus, the detailed description is omitted herein.

The fourth display panel 1910 stereoscopically displays a 3D object.

The fourth sensing unit 1920 senses an instruction of a user to convert a 3D object into a 2D object and to convert a 2D object into a 3D object. To perform the conversion, the fourth sensing unit 1920 may include a touch sensor to sense a touch of a user, a 6-axis sensor to sense a movement and an inclined direction of the apparatus 1900, and the like, and a proximity sensor to sense the presence of a nearby user.

The fourth control unit 1930 adjusts the display condition of a 3D object and a 2D object if a user instruction is sensed.

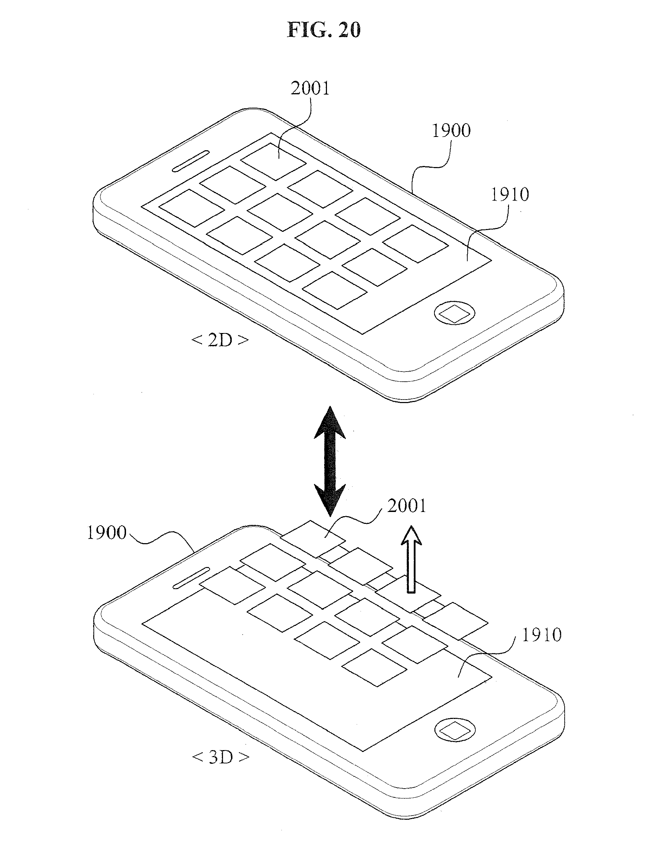

FIG. 20 is a view illustrating conversion between a 2D object and a 3D object, according to an exemplary embodiment.

A plurality of widget icons 2001 are displayed as 2D objects on the fourth display panel 1910. If a user's downward shake manipulation, or any other type of preset manipulation, on the apparatus 1900 is sensed, the fourth control unit 1930 converts the 2D objects into 3D objects and displays the 3D objects on the fourth display panel 1910. The widget icons to be stereoscopically displayed. If a user's upward shake manipulation, or any other type of preset manipulation, on the apparatus 1900 is sensed, the fourth control unit 1930 converts 3D objects into 2D objects and displays the 2D objects on the fourth display panel 1910. The conversion between a 2D object and a 3D object may be applied to objects capable of interacting with a user, for example, a soft key, a control button of a media player and so on.

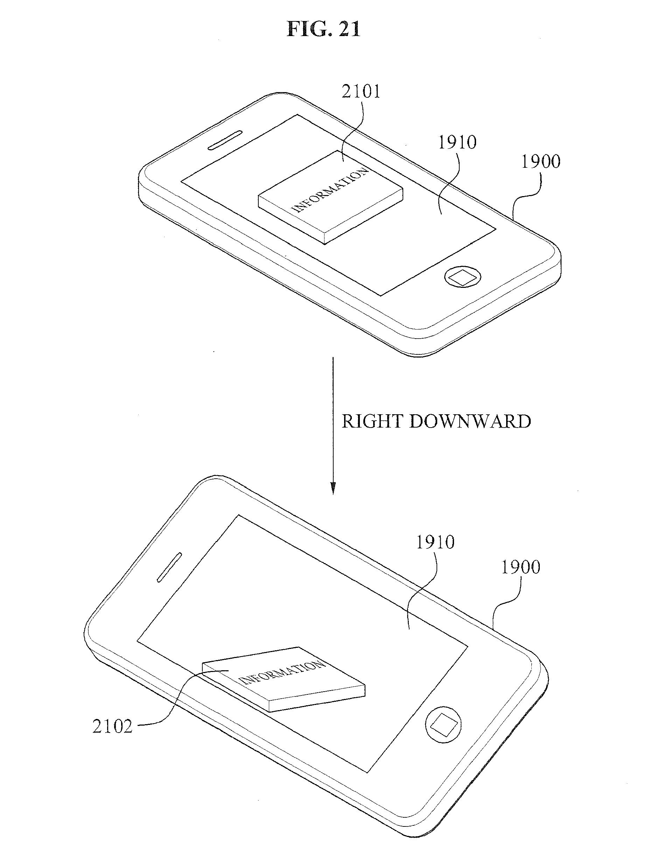

FIG. 21 is a view illustrating conversion between a 2D object and a 3D object, according to an exemplary embodiment.

If an inclination of the apparatus 1900 is sensed, the fourth control unit 1930 adjusts a display angle of a 2D object displayed on the fourth display panel 1910 based on the inclined direction of the apparatus 1900. The fourth control unit 1930 enables the 2D object to be displayed as a 3D object on the forth display panel 1910.

Specifically, if a user inclines the apparatus 1900 such that the apparatus 1900 experiences changes in at least of one its four-directional heights, a 6-axis sensor of the fourth sensing unit 1920 may sense an inclined angle. The fourth control unit 1930 displays a 2D object 2101 as a 3D object 2102 on the fourth display panel 1910 by inclining the 2D object 2101 according to the sensing result of the fourth sensing unit 1920, so that the 2D object 2101 can be seen better by the user. Thus, the fourth control unit 1930 stereoscopically displays the 2D object 2101 as 3D object 2102 in real time, according to the amount of inclination of the apparatus 1900. In this instance, the user may selectively enable only certain objects defined and preset to interact with the user to be converted into and displayed as a 3D object.

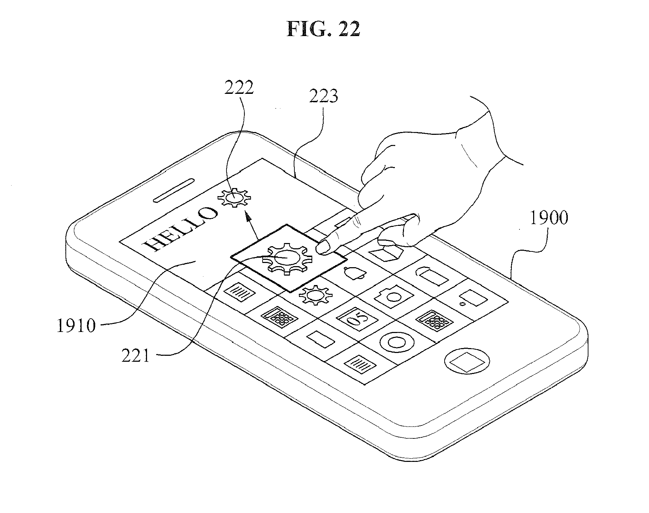

FIG. 22 is a view illustrating conversion between a 2D object and a 3D object, according to an exemplary embodiment.

If a user selects an object, such as an emoticon, to be added to a text message while the user is writing the text message on an editor page 223 using an MMS or an SMS service, the fourth control unit 1930 displays the selected emoticon as a 3D object 221 on the fourth display panel 1910. Thus, if a user's drag manipulation of the displayed 3D object 221 onto the editor page is sensed, the fourth control unit 1930 converts the 3D object 221 into a 2D object 222 and displays the 2D object 222 on the editor page 223. The 2D object 222 displayed on the editor page 223 may be selectively displayed as a 3D object.

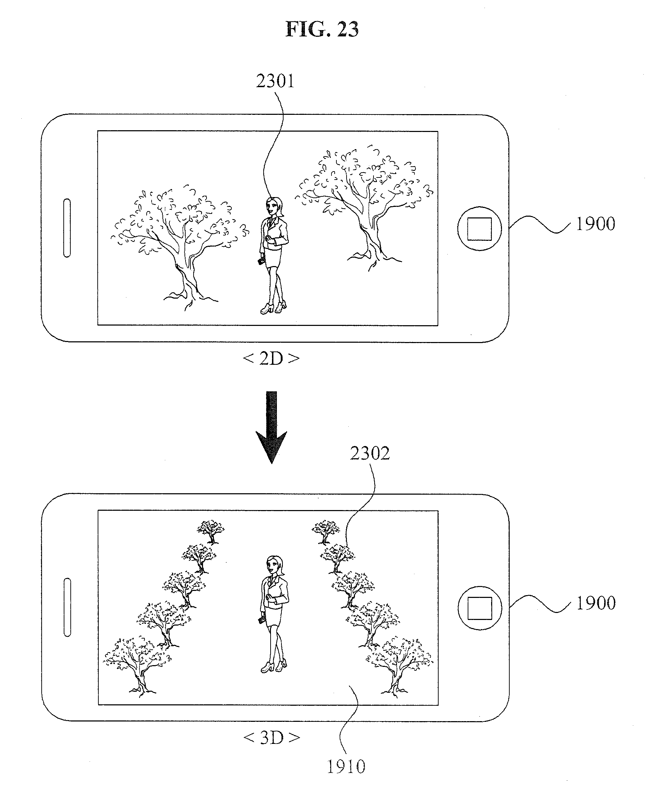

FIG. 23 is a view illustrating conversion between a 2D object and a 3D object, according to an exemplary embodiment.

If the apparatus 1900 further includes a stereoscopic camera, the apparatus 1900 may initially display an image taken through the stereoscopic camera as a 2D object 2301, and after time elapses, gradually convert the 2D object 2301 into a 3D object 2302 and display a 3D object 2301 on the fourth display panel 1910. For example, if an image is a mountain, the fourth control unit 1930 initially displays the mountain image as a 2D object, and gradually converts the mountain image as a 3D object over time and displays the 3D object on the fourth display panel 1910, thereby providing a stereoscopic effect, such as a real mountain that gradually is inclined in upward direction.

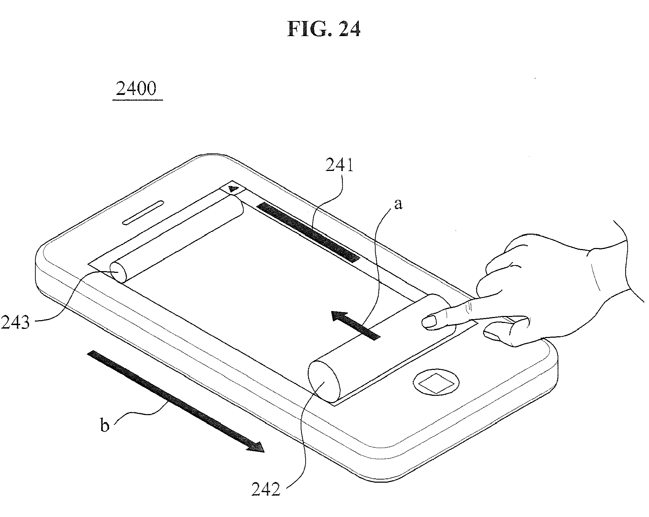

FIG. 24 is a view illustrating a 3D object processing apparatus according to an exemplary embodiment.

The apparatus 2400 of FIG. 24 may be one of the apparatuses 100, 1100, 1500 and 1900 described with reference to FIGS. 1, 11, 15 and 19. The apparatus 2400 displays a menu list and a scroll bar 241 on a screen. If a user touches the scroll bar 241, 3D objects 242 and 243 of a cylindrical shape are then displayed on the lower section and the upper section of the screen, respectively. The user may then scroll the screen by rolling the 3D objects 242 and 243 with a finger in midair relative the 3D objects 242 and 243.

If a user's rolling manipulation of the 3D object 242 is sensed, the apparatus 2400 adjusts the size of the 3D object 242 depending on the rolling direction. For example, when the user rolls the 3D object 242 in the direction of 'a', the apparatus 2400 recognizes the roll as an upward scroll, and increases the size of the 3D object 242 and decreases the size of the 3D object 243. In this instance, the menu list displayed on the screen is moved in the direction of 'b'.

Conversely, when the user rolls the 3D object 242 in the direction of 'b', the apparatus 2400 recognizes the roll as a downward scroll, and decreases the size of the 3D object 242 and increases the size of the 3D object 243. Thus, the user can intuitively recognize the degree of scrolling by the user from the resultant size of the 3D objects 242 and 243. Also, the user can scroll the screen without having to use the up-and-down movement of the scroll bar 241.

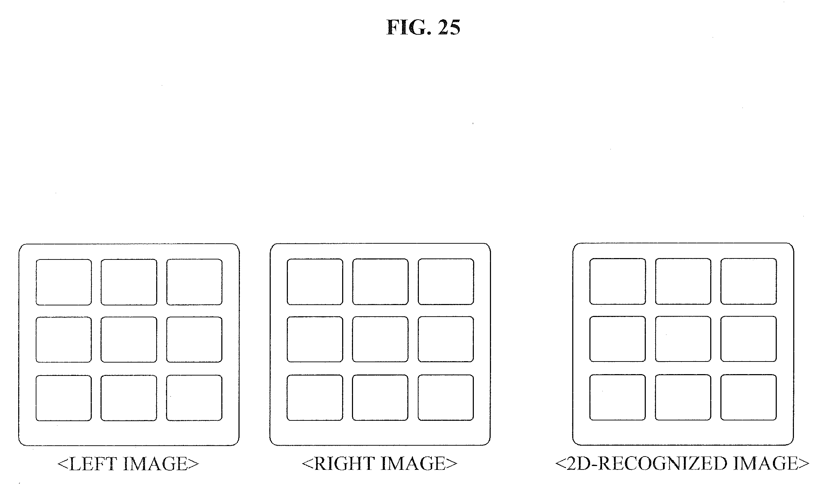

FIG. 25 is a view illustrating a method for providing a 2D image in a 3D object processing apparatus according to an exemplary embodiment.

The 3D object processing apparatus may display a 3D object, i.e., a stereoscopic image using a difference in vision seen between a left eye and a right eye. The 3D object processing apparatus may also provide a 2D image by displaying the same image without a difference in vision, as shown in FIG. 25. Accordingly, the user may recognize an image displayed on the 3D object processing apparatus as a 2D image.

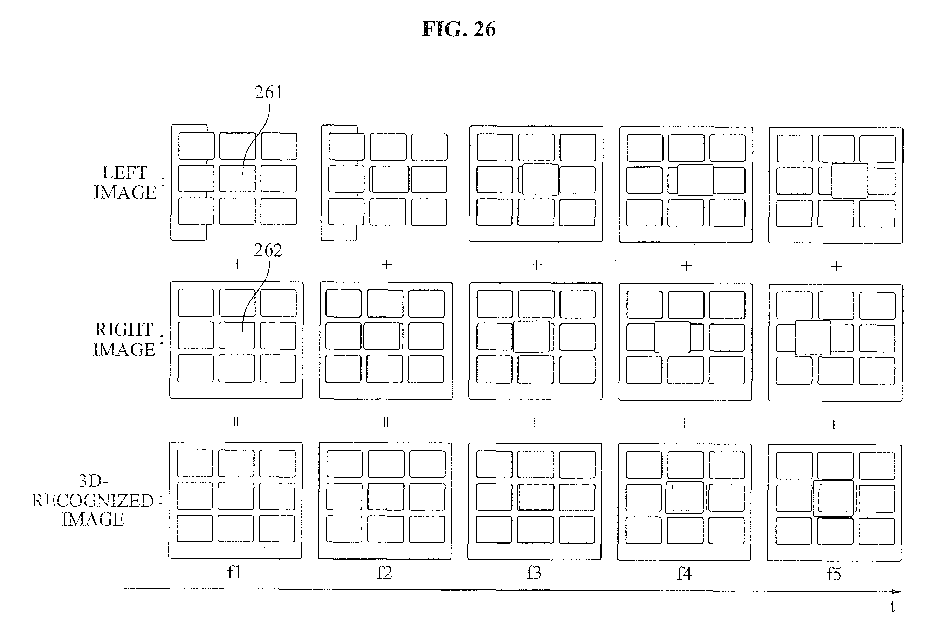

FIG. 26 is a view illustrating a method for changing a perspective effect of a 3D object in a 3D object processing apparatus according to an exemplary embodiment.

The 3D object processing apparatus may display an image with a 3D object per frame in order to provide a perspective effect of the 3D object. For example, the 3D object processing apparatus may move the position at which the 3D object is displayed, in a right or left direction, and optionally, may gradually increase the size of the 3D object per frame. Accordingly, the 3D object may be displayed with a gradually increase in size, so that the perspective effect for a user of the 3D object may be changed per frame. Further, a moving distance, such as an increasing or decreasing size of the 3D object per frame may be calculated in advance and stored in the 3D object processing apparatus.

Referring to FIG. 26, 't' is time, f1 to f5 are 3D images, i.e., 3D frames that are displayed on the 3D object processing apparatus and recognized by a user in a sequential order. Each of the frames f1 to f5 consists of a left image and a right image. The frame f1 may be recognized as a 2D image because a left image and a right image are identical to each other. For a left image, the 3D object processing apparatus sequentially moves objects 261, of which a perspective effect is to be changed, in a right direction, and optionally increases the size of the objects 261. For a right image, the 3D object processing apparatus sequentially moves objects 262, of which a perspective effect is to be changed, in a left direction, and optionally increases the size of the object 261. The user may obtain 3D images by viewing both the objects 261 and 262, with the changes described above. Thus, the user is able to view the various 3D frames indicated as f1 to f5 in a sequential order.

Also, the 3D object processing apparatus may display a perspective 3D object more rapidly by displaying a frame f1 and then a frame f5, as opposed to displaying each frame f1 to f5 in a sequential order.

To decrease the size of the 3D object, the 3D object processing apparatus may display a 3D object per frame with gradually decreased size or gradually decreased position where the 3D object is displayed, as opposed to the description of FIG. 26.

The method for changing a perspective effect of a 3D object described with reference to FIG. 26 may be used to adjust a perspective effect by the 3D object processing apparatus 1100 of FIG. 11.

The exemplary embodiments according to the present invention may be recorded in non-transitory computer-readable media including program instructions to implement various operations embodied by a computer. The media may also include, alone or in combination with the program instructions, data files, data structures, and the like. The media and program instructions may be those specially designed and constructed for the purposes of the present invention, or they may be the kind well-known and available to those having skill in the art.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
Provided is a three-dimensional (3D) object processing apparatus. The apparatus is capable of interacting with a user and utilizes a stereoscopic effect of a 3D user interface (UI) as information. The apparatus includes a combination of various units, including but not limited to, a display panel, a sensing unit and control unit to effectuate interaction between a user and a 3D object sourced from the apparatus.

## Claims

1. A three-dimensional (3D) object processing apparatus, comprising:
a display panel to display a 3D object; and
a control unit to perform a function relation to the 3D object.

2. The three-dimensional (3D) object processing apparatus of claim 1 further, comprising:
a sensing unit to sense a result of a user's manipulation of the 3D object;
wherein the display unit is adapted to stereoscopically display the 3D object and the control unit is adapted to perform a function corresponding to the sensed result of the sensing unit,
wherein preferably at least one of a perspective effect and a stereoscopic effect of the displayed 3D object is adjusted by the user's manipulation.

3. The 3D object processing apparatus of claim 2, wherein the displayed 3D object comprises a plurality of icons, and
if a first icon is selected by the user's manipulation,
the control unit controls the display panel to display the first icon with a greater or lesser dimension than a second icon that is not selected.

4. The 3D object processing apparatus of claim 2 or 3, wherein if the displayed 3D object adjusts a volume, and the user's manipulation is a continual pushing of the 3D object in midair, the control unit controls the display panel to display the 3D object with a reduced height and adjusts the volume.

5. The 3D object processing apparatus of claim 2 or 3, wherein the 3D object is a 3D keyboard user interface (UI) input.

6. The 3D object processing apparatus of one of claims 2 to 5, wherein if the displayed 3D object is a 3D keyboard UI including a plurality of keys, and the user selects a first key and a second key at about the same time, the control unit controls the display panel to display the first key and the second key with a greater dimension than a third key that is not selected;
or/and
wherein the control unit controls the display panel to display a map displayed on the display panel with a first changed magnification value if the displayed 3D object is pushed, and controls the display panel to display the map with a second changed magnification value if the displayed 3D object is pulled;
or/and
wherein if the user selects an information button on the display panel while a file is being executed by the apparatus, the control unit controls the display panel to display detailed information of the file being executed in a pop-up form as the 3D object;
or/and
wherein if the user selects a 3D mode on a menu page displayed on the display panel, the control unit controls the display panel to display a sub-menu list of the selected 3D mode as the 3D object.

7. The 3D object processing apparatus of one of claims 2 to 6, wherein:
the sensing unit includes a wind sensor to sense a breeze, and
the control unit controls the display panel to display a target menu at a predetermined position among a plurality of menus displayed on the display panel if the sensing unit senses a breeze for a first predetermined time, and executes the target menu if the sensing unit receives two sensed breezes within a second predetermined time.

8. The three-dimensional (3D) object processing apparatus of claim 1,
wherein the display panel serves to stereoscopically display a 3D object corresponding to a category; and
the control unit is adapted to control the display panel to display the 3D object with an adjusted display condition based on the status of the category.

9. The 3D object processing apparatus of claim 8, wherein the adjusted display condition is at least one of a perspective effect and height of the 3D object.

10. The 3D object processing apparatus of claim 8 or 9, wherein a height of the 3D object displayed is proportional to at least one of an amount of data and the number of data files stored in the category;
or/and
wherein a height of the 3D object displayed is increased over time in a first form, and if a predetermined time is exceeded, the 3D object is displayed in another form.

11. The 3D object processing apparatus of one of claims 8 to 10, further comprising:
a sensing unit to sense a user's manipulation about a space where the 3D object is displayed,
wherein if the user pushes one of the displayed 3D objects in midair,
the control unit deletes data of a category corresponding to the pushed 3D object.

12. The 3D object processing apparatus of one of claims 8 to 11, wherein the control unit controls the display panel to sequentially display left frames in which at least one of position and size of the 3D object gradually changes, and to sequentially display right frames in which at least one of position and size of the 3D object gradually changes.

13. The three-dimensional (3D) object processing apparatus of claim 1,
wherein the display panel serves to display a 3D object corresponding to an event in a pop-up form if the event occurs; and
the control unit is adapted to adjust a pop-up rate and a size of the 3D object depending on a priority associated with the event;
wherein if a plurality of events occur within a predetermined time, the control unit preferably controls the display panel to display a 3D object with a highest priority with a largest size at a faster pop-up rate, among the 3D objects corresponding to the plurality of events.

14. The 3D object processing apparatus of claim 13, further comprising:
sensing unit to sense a user's manipulation of a space where the 3D object is displayed,
wherein the control units controls the display panel to activate a menu corresponding to the displayed 3D object when the user's manipulation is touching the 3D object, and to delete the 3D object if the user's manipulation is dragging the 3D object.

15. The 3D object processing apparatus of claim 13 or 14, wherein the control unit controls the display panel to display a page related to a received text message, and to display a function selection for choosing another operation on the displayed page, as a 3D object.

16. The three-dimensional (3D) object processing apparatus of claim 1,
wherein the display panel serves to stereoscopically display a 3D object and to display a two-dimensional (2D) object;
wherein a sensing unit is provided to sense an instruction to convert the 3D object into the 2D object, and an instruction to convert the 2D object into the 3D object; and
wherein the control unit is adapted to adjust the display condition of the 3D object and the 2D object if one of the instructions is sensed.

17. The 3D object processing apparatus of claim 16, wherein if a device with the sensing unit is inclined in a direction, the control unit controls the display panel to display a 2D object as a 3D object by adjusting a display angle of the 2D object displayed on the display panel in based on a degree of inclination and the inclined direction of the device.
